# DEMANDE DE BREVET EUROPEEN

(11) **EP 1 156 576 A1**
(43) Date de publication de la demande: **21.11.2001**
(21) Numéro de dépôt: 00110734.1
(22) Date de dépôt: 19.05.2000
(51) Int. Cl.: H02K 7/06, F16C 19/10, H02K 5/128

(54) **Actionneur linéaire ou rotatif**

(71) Demandeur: Société Industrielle de Sonceboz S.A., 2605 Sonceboz (CH)
(72) Inventeur: Pfister, Jean-François, 2605 Sonceboz (CH)
(74) Mandataire: WILLIAM BLANC & CIE

(57) **Abrégé**

Actionneur (1) pour le déplacement linéaire d'un organe à commander comportant une partie de moteur (2) et une partie de dispositif d'actionnement (3) comprenant une vis filetée (14) à déplacement linéaire, et un organe rotatif (13) muni d'une partie filetée (20) complémentaire au filetage de la vis (14), l'organe rotatif pouvant être entraîné en rotation par la partie de moteur et étant supporté par des paliers (17, 18) sous forme de butées à billes à quatre points de contact disposés de chaque côté axial de ladite partie filetée pour le guidage axial et radial de l'organe rotatif. Les chemins de roulement (26, 27, 28, 29) des billes sont intégrés directement dans l'organe rotatif (13), d'une part, et des parties de corps (16) ou de boîtier (15) de l'actionneur, d'autre part.

## Description

La présente invention concerne un actionneur linéaire ou rotatif, comprenant un organe entraîné en rotation par un moteur électrique pour le déplacement d'un organe à commander. L'organe peut en particulier être un écrou d'un système vis-écrou pour le déplacement linéaire de l'organe à commander.

Des actionneurs linéaires sont très répandus et utilisés dans beaucoup d'applications différentes, des exemples étant décrits dans les demandes de brevets européens N° EP-A-468920 et EP-A-987477. Les dispositifs décrits dans ces publications comportent un moteur pas-à-pas entraînant un système vis-écrou pour le déplacement linéaire d'un arbre solidaire d'une vis. Le moteur pas-à-pas permet de déplacer et positionner l'arbre de la vis rapidement, avec peu de pièces mécaniques et en utilisant une commande relativement simple.

Dans EP-A-468920, un pignon monté sur l'axe du moteur engage une roue solidaire de l'écrou. Un moyeu de la roue est pris en sandwich entre des épaules d'un boîtier pour le positionnement axial de la roue. Cette butée axiale est peu rigide et fournit un mauvais rendement en raison du frottement. D'autre part, dans certaines applications, le moteur électrique doit être séparé de l'organe à déplacer pour des raisons d'étanchéité ou de sécurité, telles que dans un système d'alimentation d'un gaz ou liquide combustible. Un dispositif tel que décrit dans EP-A-468920 ne peut pas être utilisé puisque la séparation entre le moteur et la vis est insuffisante.

Dans EP-A-987477, des aimants permanents sont montés sur l'écrou qui est donc entraîné directement par le champ magnétique créé par les bobines du moteur. L'écrou est monté dans le moteur sur un seul palier. Les supports axial et radial de l'écrou sont très peu rigides et donc instables, que ce soit par rapport à des forces statiques ou dynamiques. Dans beaucoup d'applications, la stabilité est pourtant importante puisque la vis est couplée à l'écrou qui sert aussi en tant que guide déterminant la stabilité et le positionnement axial et radial de la vis.

Il y a non seulement un besoin d'améliorer la performance et la fiabilité d'actionneur du type précité, mais aussi de réduire le coût et la taille de ces dispositifs.

Le dispositif décrit dans EP-A-987477 est muni d'une paroi de séparation entre les bobines du moteur et les aimants montés sur l'écrou pour des applications où une étanchéité entre le moteur et l'organe à commander est requise. Cette paroi de séparation comporte un rebord en appui contre un boîtier de la partie statorique du moteur d'un côté, et de l'autre côté en appui contre un joint de type O-ring pris en sandwich entre le rebord et un couvercle de l'actionneur. La fiabilité d'étanchéité dépend donc de la qualité d'étanchéité du joint, qui peut se détériorer avec l'âge, se déplacer sous l'effet de chocs ou être mal monté, par exemple au moment de la fabrication du moteur. Il y a un avantage à améliorer la fiabilité et la sécurité de tels dispositifs, notamment pour des applications en relation avec des fluides combustibles.

Un but de l'invention est donc de réaliser un actionneur performant, fiable et peu coûteux.

Il est avantageux pour des applications nécessitant une étanchéité ou séparation entre le moteur électrique et l'organe à commander, de réaliser un actionneur ayant une étanchéité fiable.

Il est en outre avantageux de réaliser un dispositif avec peu de pièces pour réduire les coûts d'assemblage et de fabrication.

Il est aussi avantageux de réaliser un actionneur linéaire ou rotatif compact, mais rigide et précis.

Des buts de l'invention ont été réalisés par un actionneur selon la revendication 1.

Dans la présente invention, un actionneur pour le déplacement linéaire d'un organe à commander comporte une partie de moteur et une partie de dispositif d'actionnement comprenant une vis à déplacement linéaire et un organe rotatif ayant une partie filetée complémentaire au filetage de la vis et pouvant être entraîné en rotation par la partie de moteur, l'organe rotatif étant supporté par des paliers sous forme de butées à billes à quatre points de contact disposés de chaque côté axial d'une partie filetée de l'organe rotatif pour le guidage axial et radial de celui-ci, les chemins de roulement des billes étant intégrés directement dans l'organe rotatif, d'une part, et des parties de corps ou de boîtier de l'actionneur, d'autre part.

Les chemins de roulement sont de préférence formés de tôle emboutie qui peut être durcie par une opération de trempe. Les chemins de roulement peuvent être fixés à l'organe rotatif et respectivement aux parties de corps ou de flasque par des languettes élastiques permettant l'encliquetage des pièces dans une direction axiale, correspondant à la direction de l'axe de rotation de l'organe rotatif, la vis, les billes et les flasques pouvant aussi tous être montés sur la partie de moteur dans la direction axiale. Les chemins de roulement peuvent aussi être collées, soudées ou surmoulées respectivement audit écrou et aux parties de corps ou de boîtier.

Avantageusement, cette construction permet de réduire sensiblement les coûts d'assemblage et de fabrication des pièces. Les butées à billes à quatre points de contact de chaque côté de l'organe rotatif permet d'avoir une construction très rigide, stable, précise et compacte.

Les points de contact entre les billes et les surfaces inclinées, radialement intérieures et radialement extérieures, sont disposés de façon à satisfaire la relation A/B = C/D où A est la distance axiale entre la paire de points de contact radialement intérieure, B est la distance axiale entre les points de contact radialement intérieurs, C est le rayon des points de contact radialement intérieurs de l'axe de rotation, et D est le rayon des points de contact radialement extérieurs de l'axe de rotation. Cette disposition des points de contact assure que les billes roulent sur les chemins sans glisser.

Une partie de corps intégrant un chemin de roulement peut être montée sur une paroi séparant la partie de moteur et la partie de dispositif d'actionnement.

Des buts de l'invention ont aussi être réalisés par un actionneur selon la revendication 7.

Selon un autre aspect de la présente invention, un actionneur pour le déplacement linéaire ou rotatif d'un organe à commander comporte une partie de moteur, une partie de dispositif d'actionnement comprenant un organe rotatif, et une partie d'accouplement, cette partie d'accouplement comportant des parties aimantées, solidaires respectivement de l'organe rotatif et/ou d'un rotor apte à être entraîné par la partie de moteur, un entrefer étant formé entre les parties aimantées, l'actionneur comportant en outre une paroi de séparation continue entre la partie de moteur et la partie d'actionnement, la paroi de séparation ayant une portion disposée dans ledit entrefer et une portion sous forme de flasque extérieure pouvant être montée contre un support ou une paroi de montage d'un dispositif à commander.

Avantageusement, cette construction permet de séparer fiablement la partie de moteur de la partie d'actionnement de façon étanche, non seulement du point de vue de l'écoulement des fluides, mais aussi du point de vue électrique. Des arcs électriques provenant de la partie de moteur électrique sont donc séparés de la partie d'actionnement de façon très effective et fiable.

La partie d'actionnement peut être sous forme d'une partie de dispositif vis-écrou, comprenant une vis à déplacement linéaire entraînée par un écrou rotatif formant l'organe rotatif couplé au moteur.

Les parties aimantées peuvent comporter un ou plusieurs aimants fixés ou solidaires d'une extension de l'écrou, et un nombre correspondant d'aimants disposés sur une extension du rotor en regard des aimants fixés sur l'écrou et formant entre eux un entrefer dans lequel s'étend une portion de la paroi de séparation. Il est toutefois également possible de n'avoir qu'un ou plusieurs aimants seulement sur l'extension de l'écrou ou l'extension du rotor, l'autre de ces parties comportant des dents ou protubérances de matériaux magnétiques en regard des aimants, de sorte que la force d'attraction magnétique permet au rotor d'entraîner l'écrou. Les aimants sur le rotor sont de préférence des aimants permanents, mais ils peuvent aussi être des électro-aimants. Pour augmenter le couple de transmission, il y a de préférence plusieurs aimants disposés respectivement sur le pourtour de l'extension du rotor et de l'extension de l'écrou de façon à augmenter la force d'attraction magnétique totale entre ces parties.

La paroi de séparation ou tout au moins la portion disposée dans l'entrefer peut être en un matériau magnétique, de façon à augmenter le flux magnétique entre aimants opposés.

La paroi de séparation peut être en un matériau conducteur d'électricité, tel qu'une tôle en acier qui est, d'une part, résistante et peu coûteuse et, d'autre part, assure une séparation électrique et physique de la partie du moteur et de la partie du dispositif vis-écrou.

D'autres buts et aspects avantageux de l'invention ressortiront des revendications et de la description et des dessins annexés, dans lesquels:
la Fig. 1 est une vue en coupe d'un actionneur linéaire selon une première forme d'exécution de l'invention;
la Fig. 2 est une vue en coupe d'un actionneur linéaire selon une deuxième forme d'exécution de l'invention; et
la Fig. 3 est une vue détaillée en coupe d'un des paliers d'un actionneur selon l'invention.

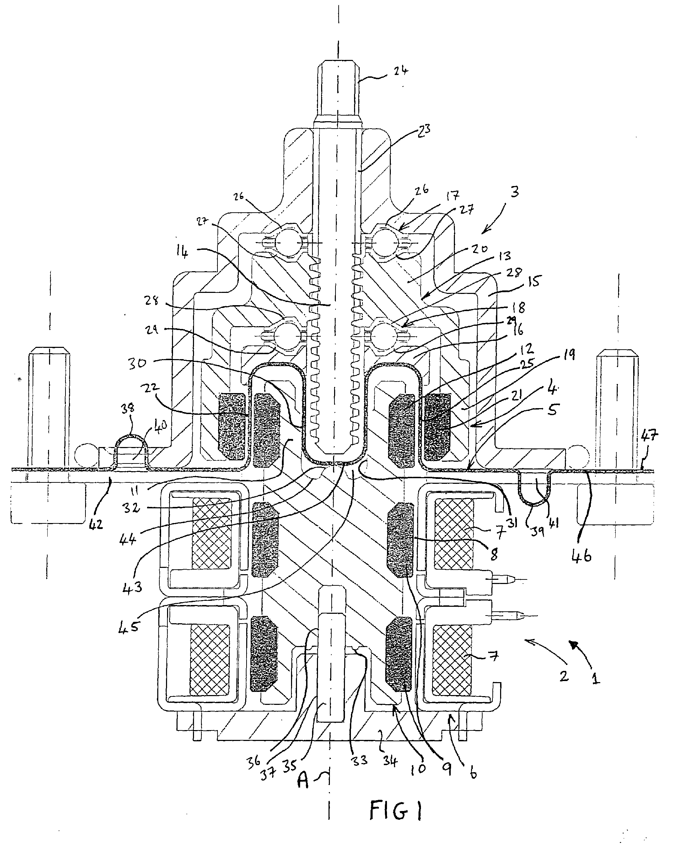

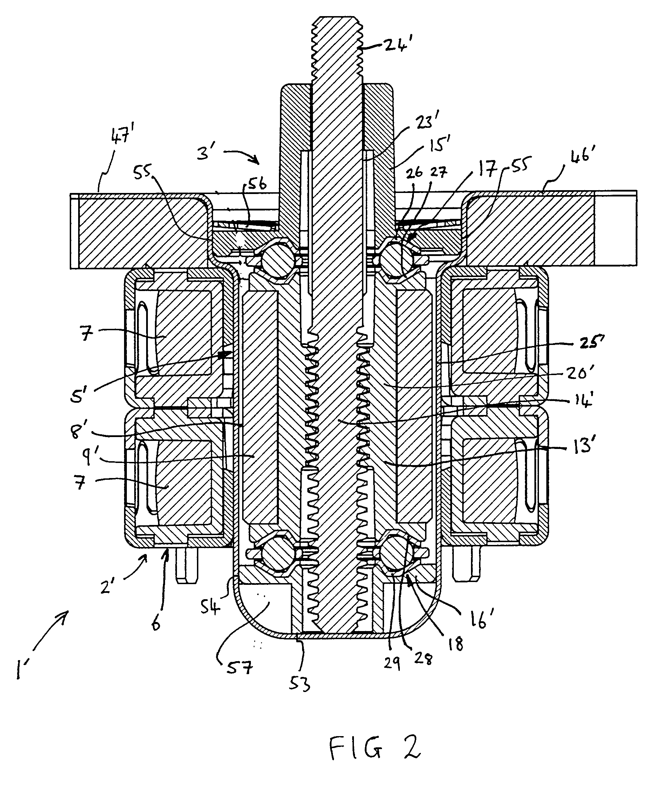

En faisant référence aux figures 1 et 2, un actionneur 1, 1' comporte une partie de moteur électrique 2, 2', une partie d'actionnement 3, 3' sous forme d'une partie de dispositif vis-écrou, et une paroi de séparation 5, 5'. La partie de moteur électrique 2, 2' comporte, dans ces exemples, un moteur pas-à-pas ayant des aspects similaires à des moteurs pas-à-pas conventionnels, tels que le stator 6 comportant deux parties bobinées 7 séparées par un entrefer 8, 8' d'aimants permanents 9, 9' montés sur un rotor 10, comme dans la première forme d'exécution selon la Fig. 1, ou sur un écrou 13' comme dans la deuxième forme d'exécution selon la Fig. 2. L'utilisation d'un moteur pas-à-pas est avantageuse puisqu'il permet de facilement et rapidement régler la position de l'organe à commander dans une construction compacte et peu coûteuse. D'autres types de moteurs réversibles peuvent néanmoins être utilisés dans la présente invention.

Dans la première forme d'exécution selon la Fig. 1, une extension 11 s'étend axialement (c'est-à-dire dans une direction de l'axe A de rotation de moteur) du rotor 10 dans une partie d'accouplement 4. L'extension 11 comporte une partie aimantée 12 qui peut, par exemple, être composée de plusieurs aimants permanents disposés sur le pourtour de l'extension, ou d'un aimant permanent multipolaire sous forme d'anneau.

La partie d'actionnement 3, 3' comporte un organe rotatif sous forme, dans les exemples illustrés, d'un écrou ou organe fileté 13, 13' engageant un organe complémentaire sous forme d'une vis 14, 14' ayant une partie filetée, un boîtier ou couvercle 15, 15', une partie de corps 16, 16' et des paliers 17, 18 pour le support en rotation de l'organe rotatif 13, 13'.

Dans la première forme d'exécution selon la Fig. 1, une extension 19 s'étend axialement d'une partie de corps 20 de l'organe rotatif, l'extension comportant une partie aimantée 21 composée par exemple de plusieurs aimants disposés sur son pourtour intérieur en regard d'aimants correspondants 12 sur l'extension du rotor. La partie aimantée 21 de l'extension de l'organe rotatif peut également être un aimant permanent multipolaire sous forme d'anneau. Les aimants sur le rotor et sur l'organe rotatif ont des pôles opposés définissant un champ magnétique essentiellement orthogonal à l'axe de rotation et traversant l'entrefer 22 entre les parties d'aimants du rotor et de l'écrou. La force d'attraction magnétique qui en résulte permet la transmission d'un couple fourni par le rotor 10 à l'organe rotatif 13.

Dans les formes d'exécution illustrées, la rotation de l'organe rotatif 13, 13' entraîne le déplacement axial de la vis 14, 14' qui est munie d'éléments de guidage axial 23, 23' coopérant avec une forme où des éléments de guidage axial complémentaires du boîtier ou couvercle 15, 15' pour bloquer la rotation de la vis. La vis 14, 14' peut être couplée à un organe à déplacer (non-illustré), par exemple en le fixant à une partie filetée 24, 24' de la vis s'étendant hors du boîtier ou couvercle 15, 15'.

D'autres variantes sont toutefois possibles sans sortir du cadre de l'invention. Par exemple, l'organe rotatif peut être solidaire d'une vis qui déplace, linéairement, un écrou couplé à l'organe à commander ou faisant même partie de l'organe à commander. Dans une autre variante, la vis peut être remplacée par d'autres organes, par exemple un axe pour l'actionnement en rotation de l'organe à commander.

L'organe complémentaire, qui est une vis 14, 14' dans les variantes illustrées, peut par exemple être couplé à un organe pour la commande du débit de gaz combustible dans un système d'alimentation ou d'écoulement de combustible, un exemple spécifique étant un système de réglage du débit pour brûleurs à gaz.

Dans de telles applications, il est important pour des raisons de sécurité de séparer la partie de moteur électrique de la partie actionnant la vanne ou autre organe se trouvant en présence ou à proximité d'un fluide combustible.

Dans la présente invention, la paroi de séparation 5, 5' disposée entre la partie de dispositif vis-écrou 3, 3' et la partie de moteur 2, 2' est continue et s'étend jusqu'à l'extérieur de l'actionneur, formant ainsi une séparation très efficace et fiable entre ces parties.

Dans des formes d'exécution avantageuses, la paroi de séparation 5, 5' est formée d'une paroi conductrice, telle qu'une tôle métallique, qui peut être reliée électriquement à l'installation à commander (et à la terre), de sorte qu'il n'y a aucune différence de potentiel électrique entre cette paroi et l'installation à commander.

La paroi permet de séparer la partie de moteur de la partie de dispositif vis-écrou par une étanchéité physique et électrique, notamment si la paroi est conductrice.

Dans la première forme d'exécution selon la Fig. 1, la paroi de séparation 5 comporte une portion 25 dans l'entrefer 22 des extensions 11, 19 et s'étend radialement jusqu'à une portion extérieure 46 sous forme de flasque qui présente une surface 47 destinée à être montée contre un support ou une paroi d'un dispositif à commander. La paroi de séparation 5 ou tout au moins la portion 25 dans l'entrefer 22 peut être en un matériau ayant une bonne perméabilité magnétique de façon à augmenter le flux magnétique et ainsi la force d'attraction entre les parties aimantées 12, 21 du rotor respectivement de l'écrou. Il est à noter qu'une des parties aimantées 12, 21 peut être remplacée par un matériau magnétique, par exemple ayant des dents ou autres protubérances en regard des aimants ou paires de pôles d'un aimant multipolaire respectifs sur l'autre partie, la force d'attraction magnétique permettant la transmission du couple.

Dans la deuxième forme d'exécution selon la Fig. 2, la paroi de séparation 5' comporte une portion 25' dans l'entrefer 8' entre le stator 6 et les aimants 9' sur l'écrou 13', et une portion extérieure 46' sous forme de flasque qui présente une surface 47' destinée à être montée contre un support ou une paroi d'un dispositif à commander. La paroi de séparation 5', ou tout au moins la portion 25' dans l'entrefer 8', peut être en un matériau ayant une bonne perméabilité magnétique de façon à augmenter le flux magnétique entre le stator 6 et l'écrou 13'.

Les paliers 17, 18 de l'organe rotatif ou de l'écrou 13, 13' sont sous forme de butées à billes à quatre points de contact pour le positionnement axial et radial de l'écrou, un palier étant disposé de chaque côté de la partie filetée 20, 20' de l'écrou. Un des paliers 17 est disposé entre une partie du boîtier ou couvercle 15, 15' et l'organe rotatif ou l'écrou 13, 13', et l'autre palier 18 est disposé entre l'organe rotatif ou l'écrou et la partie de corps 16, 16' qui est montée contre la paroi de séparation 5, 5'. Les chemins de roulement 26, 27 du roulement à billes 17 sont solidaires du boîtier ou couvercle 15, 15' respectivement de l'écrou 13, 13', et les chemins de roulement 28, 29 de la butée à billes 18 sont solidaires de l'écrou 13, 13' respectivement de la partie de corps 16, 16'. Les chemins de roulement sont avantageusement fabriqués en tôle emboutie. Ils peuvent être ensuite soudés, collés, surmoulés ou fixés mécaniquement aux parties de boîtier/couvercle, d'écrou ou de corps. Avantageusement, ceci permet de réaliser une construction particulièrement compacte et rigide à un coût de fabrication économique. En effet, l'actionneur est formé de peu de pièces qui sont faciles à assembler, ce qui réduit fortement le coût de fabrication. Il est à noter, par exemple, que les pièces telles que les roulements à billes, l'écrou, le boîtier/couvercle, la paroi de séparation et le moteur peuvent être assemblés dans une direction axiale, ce qui facilite l'automatisation des procédés d'assemblage de l'actionneur.

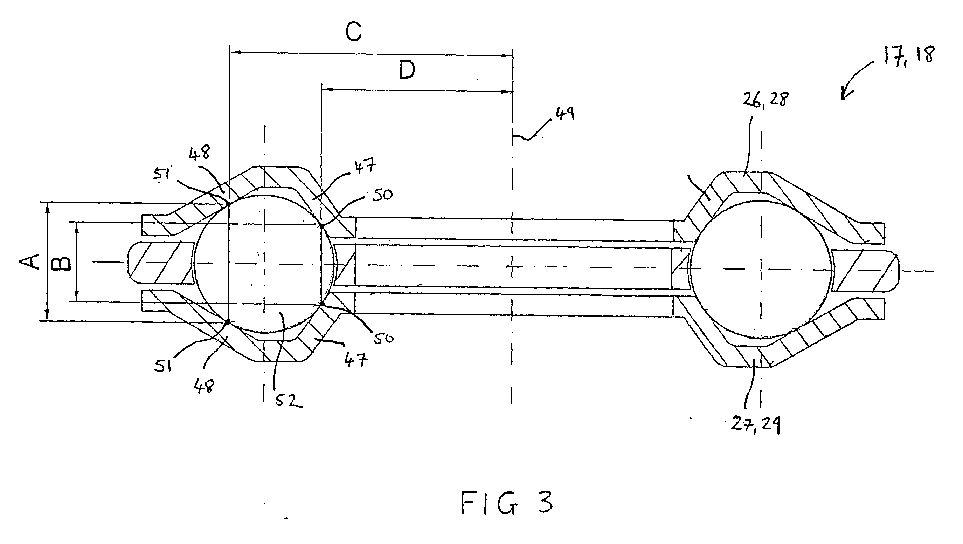

En faisant référence à la Fig. 3, les parois inclinées radialement intérieures 47 et radialement extérieures 48 des chemins de roulement sont disposées de façon que la relation A/B = C/D, où D et C sont les rayons des points de contact radialement intérieurs 50 respectivement radialement extérieurs 51 de l'axe de rotation 49, et où B et A sont les distances axiales séparant la paire de points de contact radialement intérieurs 50 et la paire de points de contact radialement extérieurs 51. En respectant cette relation, les billes 52 roulent sur le chemin de roulement 26, 28 et 27, 29 sans glisser, donc avec un minimum d'usure et de résistance.

Dans la première forme d'exécution selon la Fig. 1, la paroi de séparation 5 comporte une partie centrale 30 sous forme d'un tube fermé à une extrémité par une portion de paroi 43 sous forme de disque ayant un diamètre permettant à la vis 14 de s'étendre à l'intérieur de cette partie. L'extension 11 du rotor est disposée autour de cette partie, ce qui a l'avantage de rendre la construction plus compacte. D'autre part, la surface cylindrique extérieure de la partie de paroi centrale 30 forme, avec une surface cylindrique intérieure 31 de l'extension 11 un palier radial du rotor. Au fond 44 de la cavité 45 formée par la paroi cylindrique intérieure 31, le rotor peut être muni d'une butée de positionnement axial 32, par exemple sous forme d'une protubérance centrale pouvant être en appui contre la portion de paroi centrale 43. Le palier à l'autre extrémité du rotor peut également comporter une butée axiale 33 pouvant être en appui contre une surface intérieure d'un flasque 34 de la partie de moteur, le guidage radial étant réalisé par une goupille ou un axe 35 logé dans des cavités complémentaires 36, 37 du rotor 10 respectivement du flasque 34. Les paliers lisses du rotor 10 peuvent être remplacés par des roulements à billes si des contraintes de durée de vie le demandent.

Dans la première forme d'exécution, le positionnement de la paroi de séparation 5 par rapport à la partie de dispositif vis-écrou 3 et à la partie de moteur 2 peut être réalisé en la munissant de protubérances de positionnement 38, 39 s'engageant dans des orifices complémentaires 40, 41 respectivement du boîtier 15 et d'un flasque de support 42 du moteur.

Dans la deuxième forme d'exécution, le stator 6 du moteur se positionne autour de la paroi de séparation 5' et la partie d'actionnement 3' se positionne à l'intérieur de la cavité 57 formée par la paroi de séparation par des surfaces de positionnement respectivement axiale et radiale 53, 54 de la partie de corps 16' et des surfaces de positionnement 55 du couvercle 15', toutes ces surfaces étant en appui contre la paroi de séparation.

Le couvercle 15' est retenu par un moyen de fixation mécanique tel qu'une bague élastique ou un circlip 56 engageant d'une part le couvercle et d'autre part la paroi de séparation.

## Revendications

1. Actionneur pour le déplacement linéaire d'un organe à commander comportant une partie de moteur (2, 2') et une partie de dispositif d'actionnement (3, 3') comprenant un organe rotatif (13, 13') muni d'une partie filetée (20, 20') complémentaire au filetage de la vis, l'organe rotatif pouvant être entraîné en rotation par la partie de moteur et étant supporté par des paliers (17, 18) sous forme de butées à billes à quatre points de contact disposés de chaque côté axial de ladite partie filetée pour le guidage axial et radial de l'organe rotatif, des chemins de roulement des billes (26, 27, 28, 29) étant intégrés dans l'organe rotatif (13, 13'), d'une part, et des parties de corps (16, 16') ou de boîtier ou couvercle (15, 15') de l'actionneur, d'autre part.

2. Actionneur selon la revendication 1, **caractérisé en ce que** les chemins de roulement sont formés de tôles de métal embouties.

3. Actionneur selon l'une des revendications précédentes, **caractérisé en ce que** l'organe rotatif (13, 13') est sous forme d'un écrou ou d'une bague filetée engageant une vis (14, 14') à déplacement linéaire.

4. Actionneur selon l'une des revendications précédentes, **caractérisé en ce que** les chemins de roulement sont fixés sur leur partie de boîtier ou couvercle, d'organe rotatif ou du corps respectif par encliquetage, surmoulage, soudage ou collage.

5. Actionneur selon l'une des revendications précédentes, **caractérisé en ce que** des parois inclinées radialement intérieures (47) et radialement extérieures (48) des chemins de roulement sont disposées de façon que la relation A/B = C/D, où D et C sont les rayons des points de contact radialement intérieurs (50) respectivement radialement extérieurs (51) de l'axe de rotation (49) de l'organe rotatif, et où B est la distance axiale séparant la paire de points de contact radialement intérieurs (50) et A est la distance axiale séparant la paire de points de contact radialement extérieurs (51).

6. Actionneur selon l'une des revendications précédentes, **caractérisé en ce qu'**il comporte une paroi de séparation (5, 5') séparant la partie de moteur de la partie de dispositif d'actionnement et ayant une portion disposée dans un entrefer (22, 8') entre la partie de moteur et l'organe rotatif de la partie d'actionnement.

7. Actionneur comportant une partie de moteur (2, 2'), une partie de dispositif d'actionnement (3, 3') comprenant un organe rotatif (13, 13') apte à être entraîné par la partie de moteur et comportant des parties aimantées (19, 9'), un entrefer (22, 8') et une paroi de séparation (5, 5') séparant la partie de moteur de la partie de dispositif d'actionnement et ayant une portion (25, 25') disposée dans l'entrefer, **caractérisé en ce que** la paroi de séparation s'étend jusqu'à une portion (46, 46') sous forme de flasque extérieur pouvant être monté contre un support ou une paroi de montage d'un dispositif à commander.

8. Actionneur selon la revendication précédente, **caractérisé en ce que** l'organe rotatif est supporté par des paliers (17, 18) sous forme de butées à billes à quatre points de contact disposés de chaque côté axial de l'organe rotatif (13, 13') pour le guidage axial et radial de celui-ci, des chemins de roulement des billes (26, 27, 28, 29) étant intégrés dans l'organe rotatif, d'une part, et des parties de corps (16, 16') ou de boîtier ou couvercle (15, 15') de l'actionneur, d'autre part.

9. Actionneur selon l'une des revendications 6 à 8, **caractérisé en ce que** la paroi de séparation (5, 5') est en un matériau conducteur.

10. Actionneur selon la revendication précédente, **caractérisé en ce que** la paroi de séparation (5, 5') est fabriqué avec une tôle métallique.

11. Actionneur selon l'une des revendications 6 à 10, **caractérisé en ce que** la paroi de séparation est en un matériau ayant une bonne perméabilité magnétique.
